# EUROPEAN PATENT APPLICATION

(11) **EP 4 700 568 A1**
(43) Date of publication of application: **25.02.2026**
(21) Application number: 25178918.6
(22) Date of filing: 27.05.2025
(51) Int. Cl.: G06F 8/73

(54) **DEPENDENCY VISUALIZATION DEVICE AND DEPENDENCY VISUALIZATION METHOD**

(30) Priority: 21.08.2024 JP 2024139574
(71) Applicant: Hitachi, Ltd., Tokyo 100-8280 (JP)
(72) Inventor: NAGANO, Takehiko, Tokyo, 100-8280 (JP); OKADA, Akimasa, Tokyo, 100-8280 (JP); NAKANO, Takahiro, Tokyo, 100-8280 (JP); OISHI, Haruki, Tokyo, 100-8280 (JP); IKEZAWA, Katsunari, Tokyo, 100-8280 (JP)
(74) Representative: MERH-IP Matias Erny Reichl Hoffmann Patentanwälte PartG mbB

(57) **Abstract**

Provided is a dependency visualization device for visualizing a dependency of software, and the dependency visualization device includes: a filtering unit configured to communicate with a user using knowledge information including information on elements related to the software, and to narrow the elements related to the software in a stepwise manner down to an element related to an update target; and an output unit configured to output the dependency of the software related to the update target based on the element narrowed down by the filtering unit.

## Description

### BACKGROUND OF THE INVENTION

### 1. Field of the Invention

The present invention generally relates to software management.

### 2. Description of Related Art

When there is a bug in software of an embedded system represented by an automobile, the bug in the software is corrected, and then the software is distributed after a version of the software to be a premise is checked, and it is checked whether a dependency is satisfied, such as whether a combination of pieces of software having information to be evidence of achieving performance satisfying a regulation is satisfied. The checking of such a dependency is continued until it is possible to find that there is no problem in units of models and grades of all vehicles on which software having a bug is installed, or in units of individual vehicles in some cases.

As an example of coping with the problem in the dependency, a method for detecting the dependency in the On The Fly format during execution of the software update has been proposed (see JP2008-507775A). In this method, simulation, virtual installation, or the like is executed, and when the installation program is executed, copied, or the like, a request for a repository, a system file, or the like is analyzed, a version of dependent software used during update is checked, and whether there is a package of appropriate dependent software is checked.

In addition, an inter-software development deliverables dependency evaluating device for evaluating a dependency state between deliverables of software development has been proposed (see JP2013-15958A). The inter-software development deliverables dependency evaluating device includes a unit for designating at least one deliverable serving as a key from a plurality of deliverables related to upstream and downstream processes of software development, a unit for acquiring association information between a plurality of deliverables related to the upstream and downstream processes of software development with reference to a deliverable association table stored in a storage device, and a unit for evaluating complexity of a dependency between the designated deliverable and a plurality of other deliverables of the upstream and downstream processes. Accordingly, the above device is used for sharing software development work.

In an embedded system represented by an automobile, required functions such as a communication line connection function, an advanced user interface, and an autonomous driving function are increased, and therefore, a scale of software is increased.

On the other hand, an interval of events that affect a development period of software, such as a model change and a minor change, is not greatly changed as in the related art, the time required for development is limited, and bugs may become apparent after shipment. In addition, introduction of an OSS technique represented by Linux (registered trademark) or the like is started, and there is a case where a security problem or the like occurs in the introduced product.

In the related art, such a bug has been dealt with by software update in a dealer. However, in order to take in the vehicle to the dealer and perform software update, it is necessary to make a reservation for the dealer, take in the automobile with convenience, and perform the software update. Thus, it takes time to perform the software update after the problem occurs. In order to solve such a problem, software update using an over the air (OTA) technique has been introduced and spread.

On the other hand, when software update of an automobile is performed, it is necessary to update the software while satisfying national and abroad automobile regulations. Therefore, it is required to make a determination by combining various kinds of knowledge such as knowledge related to regulations (for example, road transport vehicle safety standards), knowledge related to vehicle configurations, knowledge related to systems constituting vehicles, knowledge of components related to systems, and knowledge related to hardware and software of each vehicle.

More specifically, when specific software is updated, if there is software (cooperative software) that operates in cooperation with the specific software and achieves the performance defined by the automobile regulations, the cooperative software needs to be updated simultaneously with the specific software.

In order to comprehensively detect software having dependencies during update of the software as described above and implement distribution of the software, it is necessary for experts having specialized knowledge such as knowledge of regulations, knowledge of the entire vehicle, and knowledge of a system and components to gather and determine the cooperative software, which is inefficient.

### SUMMARY OF THE INVENTION

The invention has been made in view of the above points, and an object of the invention is to propose a dependency visualization device and the like capable of grasping a dependency of software.

In order to solve the above problems, the invention provides a dependency visualization device for visualizing a dependency of software. The dependency visualization device includes: a filtering unit configured to communicate with a user using knowledge information including information on elements related to the software, and to narrow the elements related to the software in a stepwise manner down to an element related to an update target; and an output unit configured to output the dependency of the software related to the update target based on the element narrowed down by the filtering unit.

In the above configuration, the elements related to the update target are narrowed down in the stepwise manner, and therefore, for example, the user can easily communicate with the dependency visualization device and easily grasp the dependency of the software related to the update target.

According to the invention, a highly convenient dependency visualization device can be implemented. Problems, configurations, and effects other than those described above will become apparent in the following description of embodiments.

### BRIEF DESCRIPTION OF THE DRAWINGS

FIG. 1 is a diagram showing an example of a dependency visualization device according to a first embodiment;
FIG. 2 is a diagram showing an example of processing of a knowledge DB creation unit according to the first embodiment;
FIG. 3 is a diagram showing an example of document structure extraction processing according to the first embodiment;
FIG. 4 is a diagram showing an example of a storage format according to the first embodiment;
FIG. 5 is a diagram showing an example of the storage format according to the first embodiment;
FIG. 6 is a diagram showing an example of data extraction processing according to the first embodiment;
FIG. 7 is a diagram showing an example of the storage format according to the first embodiment;
FIG. 8 is a diagram showing an example of the storage format according to the first embodiment;
FIG. 9 is a diagram showing an example of processing by a control unit according to the first embodiment;
FIG. 10 is a diagram showing an example of a prompt collection DB according to the first embodiment;
FIG. 11 is a diagram showing an example of general question processing according to the first embodiment;
FIG. 12 is a diagram showing an example of interaction between a user and the dependency visualization device according to the first embodiment;
FIG. 13 is a diagram showing an example of inter-department common knowledge search processing according to the first embodiment;
FIG. 14 is a diagram showing an example of interaction between the user and the dependency visualization device according to the first embodiment;
FIG. 15 is a diagram showing an example of individual department knowledge search processing according to the first embodiment;
FIG. 16 is a diagram showing an example of interaction between the user and the dependency visualization device according to the first embodiment;
FIG. 17 is a diagram showing an example of visualization processing according to the first embodiment;
FIG. 18 is a diagram showing an example of the storage format according to the first embodiment;
FIG. 19 is a diagram showing an example of the storage format according to the first embodiment;
FIG. 20 is a diagram showing an example of the storage format according to the first embodiment;
FIG. 21 is a diagram showing an example of the storage format according to the first embodiment;
FIG. 22 is a diagram showing an example of a dependency of software according to the first embodiment; and
FIG. 23 is a diagram showing an example of a dependency of software according to the first embodiment.

### DESCRIPTION OF EMBODIMENTS

### (I) First Embodiment

Hereinafter, an embodiment of the invention will be described in detail. However, the invention is not limited to the embodiment.

The present embodiment relates to configuration management during distribution of a software component (software) of an embedded system represented by an automobile, in particular, visualization of a dependency of software.

A dependency visualization device according to the present embodiment constructs a business knowledge DB. For example, when design information is created including a figure, the dependency visualization device converts information in the figure into text information using a generative artificial intelligence (generative AI) technology, then constructs a structured business knowledge DB by extracting a title, a category, a date and time, a feature, a keyword, and the like from the text information, and registers information on the system. When constructing the business knowledge DB, the dependency visualization device registers, in an inter-department common knowledge DB, knowledge commonly required by a plurality of business departments, and registers, in a business knowledge DB of a specific department, knowledge managed by each department. For example, the dependency visualization device registers, in the inter-department common knowledge DB, information related to a regulation and information related to a vehicle and a system constituting the vehicle, and registers design information and the like of individual ECU in a department-specific knowledge DB of a specific department.

During software update, the dependency visualization device uses the business knowledge DB in the stepwise manner, including public information, and extracts detection of a plurality of pieces of software having a dependency and dependency between the pieces of software. For example, in the update of software associated with a specific regulation revision, the dependency visualization device detects a dependency through a stage in which information on addition or revision of a regulation is detected from the public information, a system related to the regulation (for example, a system that conflicts with the regulation) is detected, software related to the detected system is extracted, and software having a calling relationship with software to be updated is detected.

According to the present embodiment, it is possible to reduce various operations for the purpose of detecting a dependency when software of an automobile is to be updated. As a result, an improvement in the efficiency of software distribution can be expected.

Hereinafter, an embodiment of the invention will be described with reference to the drawings. The following description and drawings are examples for illustrating the invention, and are appropriately omitted and simplified for clarity of the description. The invention can be implemented in various other forms. Unless otherwise specified, each component may be single or plural.

In the following description, the same elements in the drawings are denoted by the same reference numerals, and the description thereof will be appropriately omitted. When elements of the same type are described without being distinguished from each other, a common portion (a portion excluding a subnumber) of reference numerals including subnumbers may be used, and when elements of the same type are described while being distinguished from each other, a reference numeral including a subnumber may be used. For example, storage areas may be described as a "storage area 500" when the storage areas are not particularly distinguished from each other, and may be described as a "storage area 500-1" and a "storage area 500-2" when the individual storage areas are distinguished from each other. Notations of "first", "second", "third", and the like in the present specification and the like are used to identify the components, and the numbers and the order are not necessarily limited. In addition, a number for identifying a component is used for each context, and the number used in one context does not necessarily indicate the same configuration in another context. In addition, this does not prevent a component identified by a certain number from also having a function of a component identified by another number.

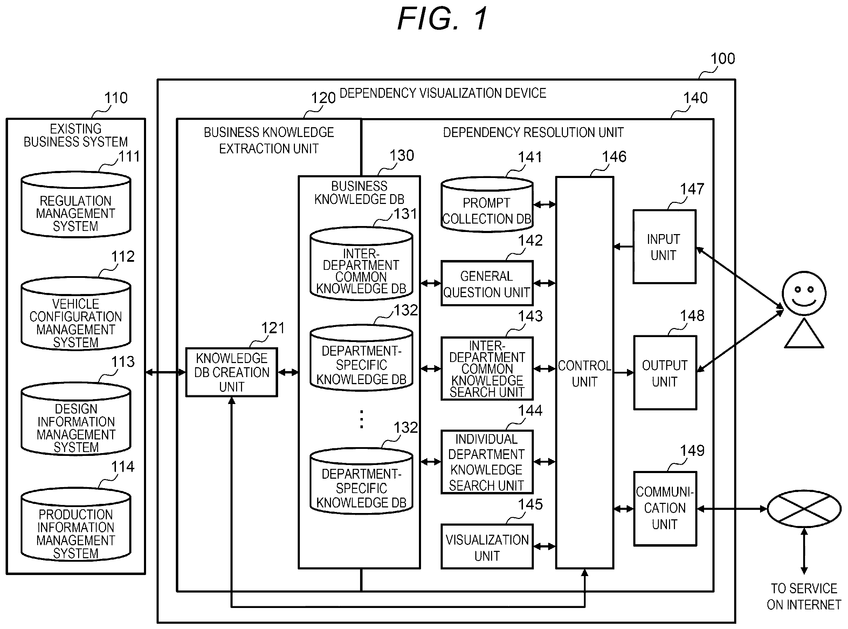

FIG. 1 shows a dependency visualization device 100 according to a first embodiment as a whole.

FIG. 1 is a block diagram showing an example of the dependency visualization device 100 according to the present embodiment. The dependency visualization device 100 is configured to include a business knowledge extraction unit 120 that extracts business knowledge from an existing business system 110, a business knowledge DB 130 that stores the extracted business knowledge, and a dependency resolution unit 140 that resolves a dependency of software while interacting with the user using the business knowledge DB 130.

The existing business system 110 is implemented by an existing system owned by an automobile OEM or the like. The existing business system 110 is configured to include, for example, a regulation management system 111, a vehicle configuration management system 112, a design information management system 113, and a production information management system 114. The regulation management system 111 registers regulation information of each country, regulation information of Japan, and the like for an automobile, and is used for searching and referencing. The vehicle configuration management system 112 manages a model, a type, a vehicle identification number (VIN), or the like of an automobile at various units in association with specifications, components, software, and regulation information. The design information management system 113 manages information related to design, such as a design document, CAD information, a software repository, and result information of a performance evaluation test. The production information management system 114 manages information related to production, such as production schedule information used for production, component procurement information, and inventory management information.

The business knowledge extraction unit 120 is configured to include a knowledge DB creation unit 121 that receives an instruction of a user from an input unit 147 to be described below, extracts a document structure such as a text portion, a drawing portion, and a table portion from each system constituting the existing business system 110 under the control by the control unit 146, converts each portion into a text, generates structural information therefrom, and stores the structural information in the business knowledge DB 130.

The business knowledge DB 130 is configured to include an inter-department common knowledge DB 131 and a department-specific knowledge DB 132. The inter-department common knowledge DB 131 stores business knowledge used across departments, such as specification information of a vehicle, component configuration information of a system including a plurality of components, and association information of regulations related to the system. The department-specific knowledge DB 132 stores detailed information managed specific to each department, such as information of software included in a component and information indicating a calling relationship of software.

The dependency resolution unit 140 is configured to include a prompt collection DB 141, a general question unit 142, an inter-department common knowledge search unit 143, an individual department knowledge search unit 144, a visualization unit 145, a control unit 146, an input unit 147, an output unit 148, and a communication unit 149.

The prompt collection DB 141 stores a template of a question sentence, a question content, and the like when the user performs a search. The general question unit 142 collects information from publicly known information using a search text created by the user using the information of the prompt collection DB 141 while utilizing a generative AI service on the Internet. The inter-department common knowledge search unit 143 uses the search text created by the user based on the information obtained by the general question unit 142 and the information of the prompt collection DB 141, and collects information across the departments related to the dependency of software from the inter-department common knowledge DB 131 of the business knowledge DB 130. The individual department knowledge search unit 144 uses the search information created by the user based on the information obtained by the inter-department common knowledge search unit 143 and the information of the prompt collection DB 141, and collects department-specific information related to the dependency of software from the department-specific knowledge DB 132 of the business knowledge DB 130. The visualization unit 145 visualizes a result based on the information on the dependency of the software obtained so far. The control unit 146 controls each function of the dependency resolution unit 140 based on the input by the user. The input unit 147 receives information on the user and passes the information on the user to the control unit 146. The output unit 148 outputs various types of information received from the control unit 146 to the user. The communication unit 149 exchanges various services and systems on the Internet based on the information received from the control unit 146.

In addition, the dependency visualization device 100 is an example of an information processing device (computer), is a notebook computer, a server device, or the like, and is configured to include a central processing unit (CPU), a random access memory (RAM), a read only memory (ROM), a hard disk drive (HDD), a communication device, and the like, which are not illustrated.

The functions of the dependency visualization device 100 (the business knowledge extraction unit 120, the business knowledge DB 130, the dependency resolution unit 140, and the like) may be implemented by, for example, the CPU reading a program stored in the ROM into the RAM and executing the program (software), may be implemented by hardware such as a dedicated circuit, or may be implemented by a combination of software and hardware. The function of the dependency visualization device 100 may be a virtual machine (VM) operating on a computer, a container operating on an operating system (OS), or an application operating on the OS. One function of the dependency visualization device 100 may be divided into a plurality of functions, or a plurality of functions may be integrated into one function. A part of the functions of the dependency visualization device 100 may be provided as another function or may be included in another function. In addition, a part of the functions of the dependency visualization device 100 may be implemented by another computer capable of communicating with the dependency visualization device 100. Each component of the hardware of the dependency visualization device 100 may be one or plural.

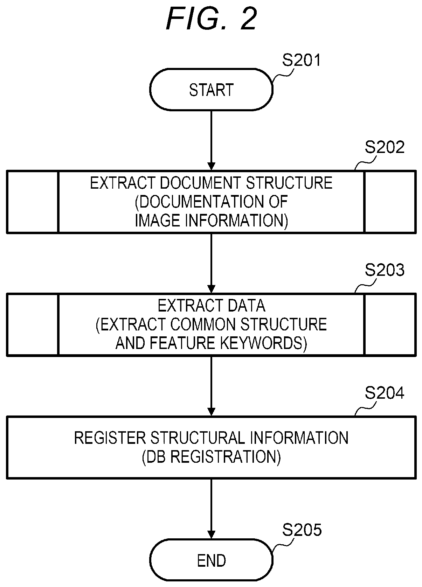

FIG. 2 is an example of a flowchart showing processing by the knowledge DB creation unit 121. The operation based on the flowchart in FIG. 2 is as follows.

Step S201: This is processing in which the user starts using a knowledge DB creation function. Here, a target system and a target document (document, software, file, or the like) are designated. After the processing, processing in step S202 is performed.

Step S202: In document structure extraction processing, the knowledge DB creation unit 121 extracts a figure and a table other than text as a target from the designated document, creates explanatory texts of the extracted figure and table using the generative AI service, and converts information on the target document into text and stores the text. After the processing, processing in step S203 is performed.

Step S203: In data extraction processing, the knowledge DB creation unit 121 extracts management information such as a title, a creation date and time, and a keyword and abstract information such as a summary of the entire document and a summary of each chapter from the document information converted into text in step S202, structures the extracted management information and the extracted summary information into a format that can be stored in a database, and stores the structured information in a memory. After the processing, processing in step S204 is performed.

Step S204: In structural information registration processing, the knowledge DB creation unit 121 stores, in the business knowledge DB 130 designated by the user, the information structured in step S203 and stored in the memory. For example, the knowledge DB creation unit 121 registers information related to regulations and information related to a vehicle and a system of the vehicle in the inter-department common knowledge DB 131, and registers information related to design of individual ECU and the like in the department-specific knowledge DB 132. After the processing, processing in step S205 is performed.

Step S205: The knowledge DB creation unit 121 outputs the processing result to the output unit 148 via the control unit 146, and ends the knowledge DB creation processing.

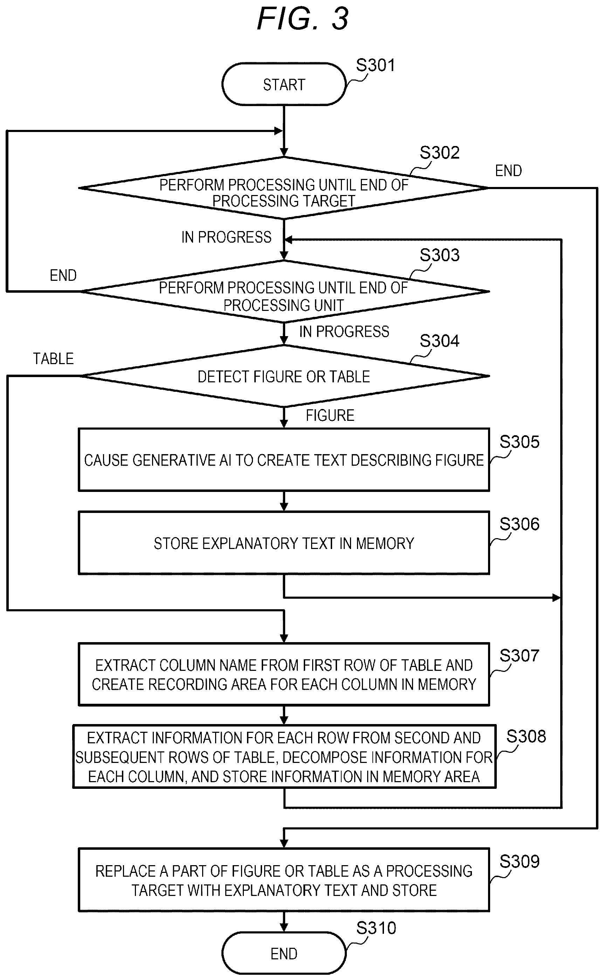

FIG. 3 is an example of a flowchart showing details of the document structure extraction processing shown in step S202 in the flowchart of FIG. 2.

Step S301: The knowledge DB creation unit 121 starts the document structure extraction processing. Here, a target document (document, software, file, or the like) is designated. After the processing, processing in step S302 is performed.

Step S302: The knowledge DB creation unit 121 reads the designated document at regular intervals, and repeats the processing in step S303 and subsequent steps until the reading is ended. The knowledge DB creation unit 121 will perform the processing in step S303 if the processing is still in progress (for example, if there is a remaining page), and will perform the processing in step S309 if the processing is ended.

Step S303: The knowledge DB creation unit 121 repeats sequential processing from a head of the unit designated in step S302 to an end of the unit. The knowledge DB creation unit 121 determines whether the end of the processing of the unit is in progress, will return to step S302 if the processing is ended, and will perform the processing in step S304 if the processing is in progress.

Step S304: The knowledge DB creation unit 121 detects whether there is a figure or a table during the processing. For example, when a file is written in a markup language, processing corresponding to each tag is performed when a tag of a figure or a table (for example, in the case of an HTML language, an HTML tag representing an image such as an img tag or an HTML tag representing a table such as a table tag) appears. In the case of the processing of the figure, the processing in step S305 is performed, and in the case of the processing of the table, the processing in step S307 is performed.

Step S305: The knowledge DB creation unit 121 describes the figure detected in step S304 by using the generative AI service or the like on the Internet. For example, using an application programming interface (API) capable of using large language models (LLM) of a specific generative AI service, an API used in the LLM of the generative AI constructed by the user, or the like, the image information acquired in step S304 is transmitted to the LLM to be used, and a result of describing the image information is acquired. After the processing, processing in step S306 is performed.

Step S306: The knowledge DB creation unit 121 stores the file name and the explanatory text of the figure processed in step S305 in the memory in association with an item number, and returns to step S303.

Step S307: The knowledge DB creation unit 121 extracts a column name of the first row of the information on the table acquired in step S304, and creates a storage area (recording area) for each column in the memory. After the processing, processing in step S308 is performed.

Step S308: The knowledge DB creation unit 121 extracts information on the second and subsequent rows of the table acquired in step S304 for each row, decomposes the information for each column, stores the information for each column in a storage area (recording area) on the memory, and returns to step S303 after the processing is ended.

Step S309: The explanation of all the figures and tables to be processed has been completed, and therefore, the knowledge DB creation unit 121 rewrites a portion of the figure and a portion of the table of the designated document with the explanatory text in the memory. After the processing, processing in step S310 is performed.

Step S310: The knowledge DB creation unit 121 ends the document structure extraction processing.

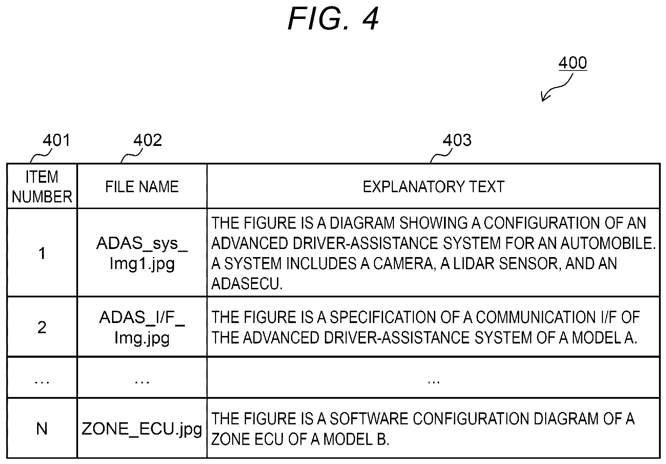

FIG. 4 is a diagram showing an example of a storage format (storage area 400) when the description of the figure described in step S306 is stored in the memory.

The storage area 400 includes an item number area 401, a file name area 402, and an explanatory text area 403. Each time the processing of the image file is completed, the knowledge DB creation unit 121 increments the row by one, increments the item number by one, records the item number in the item number area 401, records the file name of the image file in the file name area 402, and stores an explanatory content created by the generative AI in the explanatory text area 403.

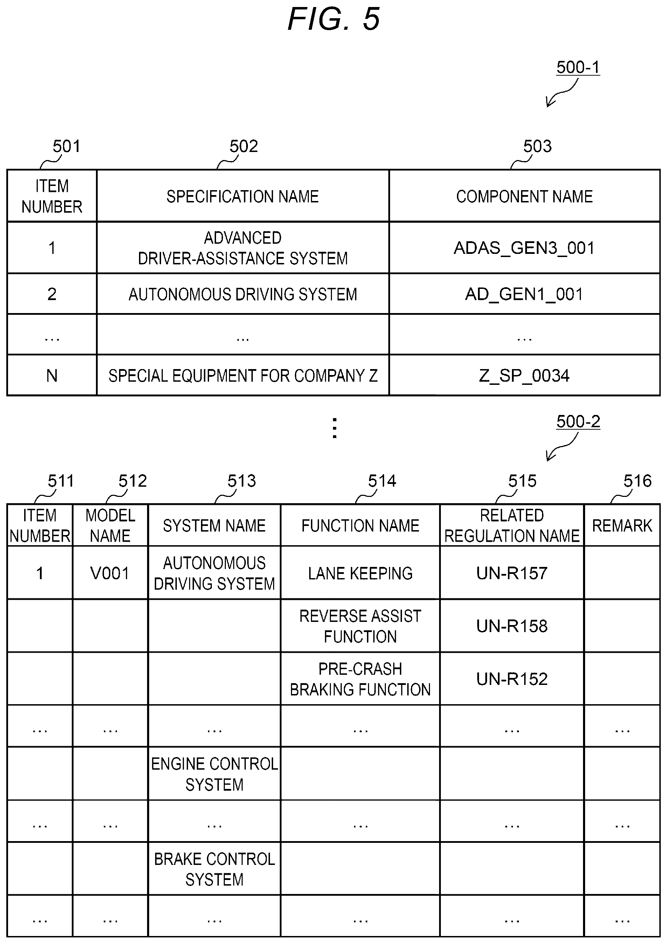

FIG. 5 is a diagram showing an example of a storage format (storage area 500) when the tables described in step S307 and step S308 are stored in the memory.

The storage area 500 is an area provided corresponding to items in a table in the document. For example, in the case of a storage area 500-1, an item number area 501, a specification name area 502, and a component name area 503 are provided corresponding to items in the first row. For example, in the case of a storage area 500-2, an item number area 511, a model name area 512, a system name area 513, a function name area 514, a related regulation name area 515, and a remark area 516 are provided corresponding to the items in the first row. The knowledge DB creation unit 121 records the area of the items in the first row of the table in the document on the memory, reads the content described in the table, and similarly records the content in each area on the memory.

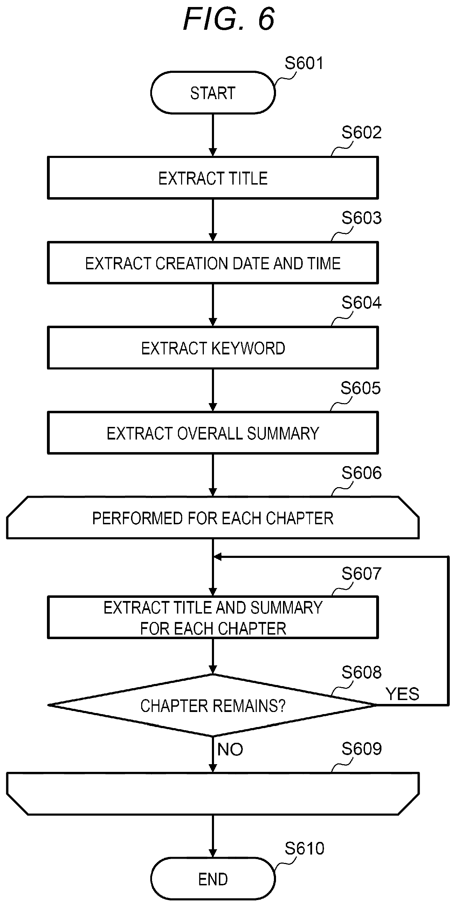

FIG. 6 is an example of a flowchart showing details of the data extraction processing shown in step S203 in the flowchart of FIG. 2.

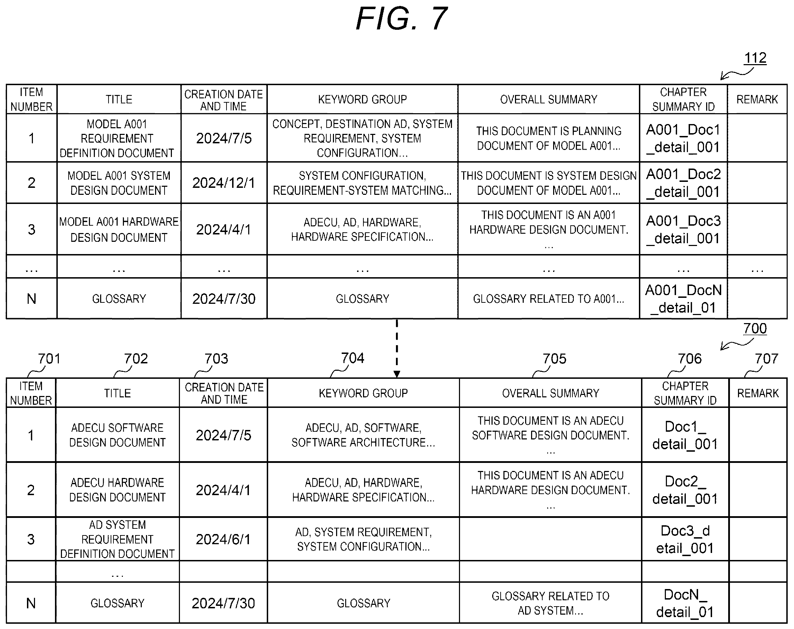

Step S601: The knowledge DB creation unit 121 starts the data extraction processing. Here, the processing is started for the document information as the target generated in step S202 in the flowchart of FIG. 2. The knowledge DB creation unit 121 generates an item number from the last number of an item number area 701 in FIG. 7 at the start of the processing, records the item number in the item number area 701 shown in FIG. 7 to be described below, and then will perform processing in step S602.

Step S602: The knowledge DB creation unit 121 extracts a title from the document information. Here, as a method for extracting a title, a method for extracting a title portion from a format, a method for extracting a title using meta-information of a markup language (for example, in the case of an HTML language, extraction is performed using a title tag), a method for extracting a title using a generative AI service, and the like are conceivable. After acquiring the title, the knowledge DB creation unit 121 records the title in a title area 702 described in FIG. 7 to be described below, and then will perform processing in step S603.

Step S603: The knowledge DB creation unit 121 extracts a creation date and time from the document information. Here, as a method for extracting a creation date and time, a method for extracting a creation date and time from a format, a method for extracting a creation date and time using meta-information of a markup language (for example, in the case of an HTML language, extraction is performed using a time tag), a method for extracting a creation date and time using a generative AI service, and the like are conceivable. After acquiring the creation date and time, the knowledge DB creation unit 121 records the creation date and time in a creation date and time area 703 described in FIG. 7 to be described below, and then will perform processing in step S604.

Step S604: The knowledge DB creation unit 121 extracts keyword information from the document information. Here, a keyword extraction method may be a method for counting the number of occurrences of words and extracting top N words (N is any number), or a method for inputting document information to the generative AI and extracting N keywords. After acquiring the keyword, the knowledge DB creation unit 121 records the keyword in a keyword group area 704 described in FIG. 7 to be described below, and then will perform processing in step S605.

Step S605: The knowledge DB creation unit 121 extracts a summary of the entire document from the document information. Here, as a method for extracting a summary, a method for extracting a portion such as a summary or an abstract from a format, an extraction method using the generative AI service, or the like is conceivable. After acquiring the summary, the knowledge DB creation unit 121 records the summary in an overall summary area 705 described in FIG. 7 to be described below, and will perform processing in step S606.

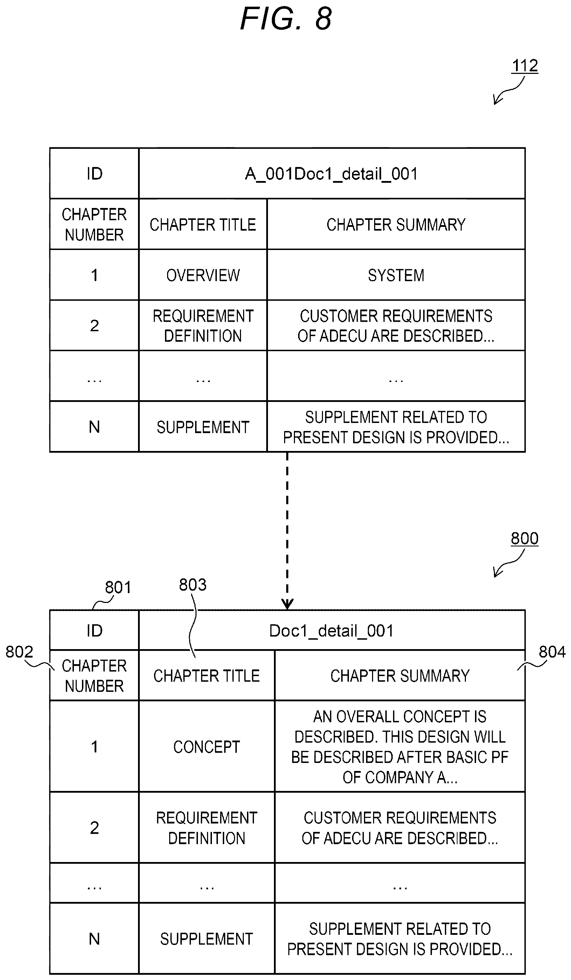

Step S606: In order to extract information for each chapter, the knowledge DB creation unit 121 generates a chapter summary ID by any method (for example, the same information as the item number may be used) and records the chapter summary ID in a chapter summary ID area 706 described in FIG. 7 to be described below. As shown in FIG. 8 to be described below, a memory area for recording a title and a summary for each chapter is ensured, a chapter summary ID is recorded in an ID area 801, and processing in step S607 is repeated as long as there is chapter information.

Here, as the chapter information, a method for extracting a chapter from a format, a method for extracting a chapter using meta-information of a markup language (for example, in the case of an HTML language, a chapter is extracted using tags such as h1 to h6 indicating heading elements), an extraction method using a generative AI service, and the like are conceivable. After extracting the chapter information, the knowledge DB creation unit 121 extracts the number of chapters, stores the number as the remaining chapter number, and then will perform processing in step S607.

Step S607: The knowledge DB creation unit 121 extracts a chapter number, a title for each chapter, and a summary for each chapter in the same manner as in step S602 and step S605, records the chapter number, the title for each chapter, and the summary for each chapter in a chapter number area 802, a chapter title area 803, and a chapter summary area 804 in FIG. 8 to be described below, sets the remaining chapter number to "-1", and then will perform processing in step S608.

Step S608: The knowledge DB creation unit 121 determines whether the remaining chapter number remains (whether the remaining chapter number is 1 or more), returns to step S607 if the remaining chapter number remains, and then will perform processing in step S609 if the remaining chapter number does not remain.

Step S609: The knowledge DB creation unit 121 completes the writing of the information recorded in FIGS. 7 and 8, initializes the remaining chapter numbers to "0", and then will perform processing in step S610.

Step S610: The knowledge DB creation unit 121 completes the data extraction processing and performs the structural information registration processing (step S204).

FIG. 7 is a diagram showing an example of a storage format (storage area 700) when contents extracted in the title extraction processing in step S602, the creation date and time extraction processing in step S603, the keyword extraction processing in step S604, and the overall summary extraction processing in step S605 in the flowchart of FIG. 6 are stored in the memory.

The storage area 700 includes the item number area 701, the title area 702, the creation date and time area 703, the keyword group area 704, the overall summary area 705, the chapter summary ID area 706, and a remark area 707. The contents described with reference to FIG. 6 are recorded in respective areas of the area 701 to the area 706. The chapter summary ID has the same contents as ID in the ID area 801 in FIG. 8 to be described below, and is used when referring to the contents in FIG. 8. The remark area 707 is an area for recording information and the like other than those recorded in the area 702 to the area 706.

FIG. 8 is a diagram showing an example of a storage format (storage area 800) when the title for each chapter and the contents extracted in the summary extraction processing in step S607 in the flowchart of FIG. 6 are stored in the memory.

The storage area 800 includes the ID area 801, the chapter number area 802, the chapter title area 803, and the chapter summary area 804. The contents described with reference to FIG. 6 are recorded in respective areas of the area 801 to the area 804.

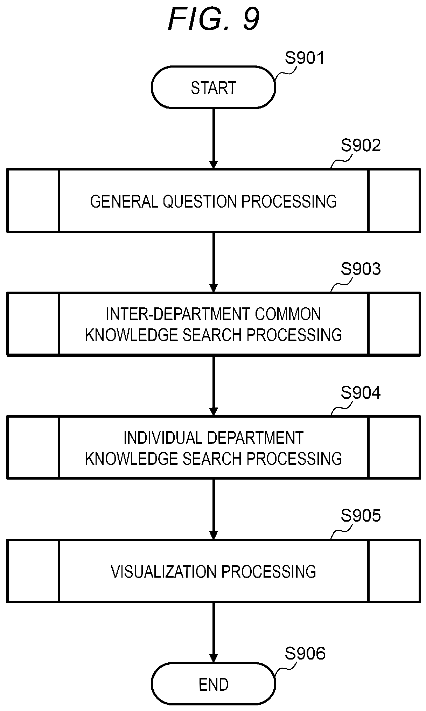

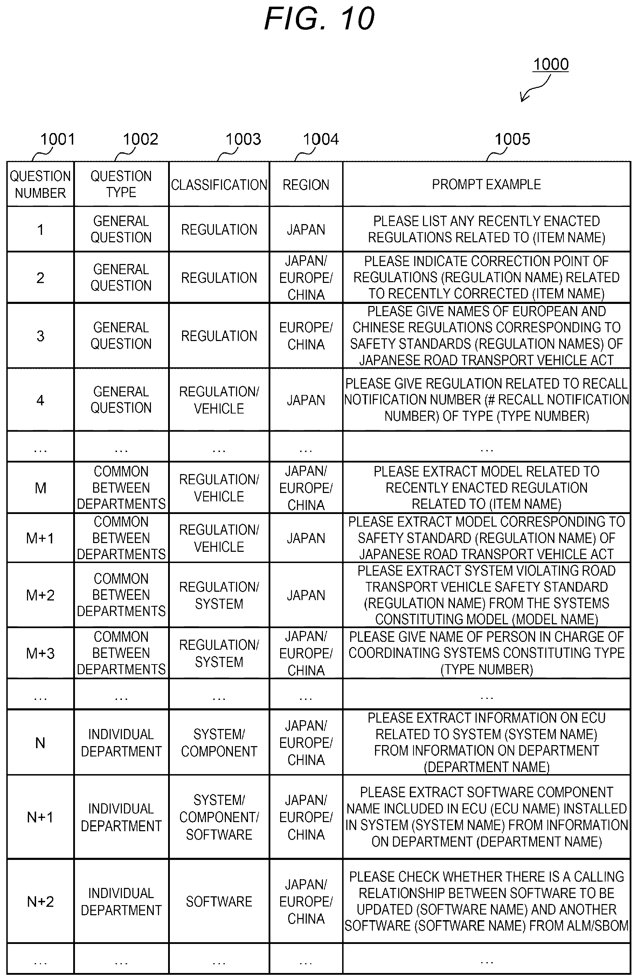

FIG. 9 is an example of a flowchart showing processing by the control unit 146. The control unit 146 collects information on whether there is another software having a dependency with software to be updated by the user while linking the information stored in the prompt collection DB 141 as shown in FIG. 10 to be described below to the general question unit 142, the inter-department common knowledge search unit 143, the individual department knowledge search unit 144, the input unit 147, the output unit 148, and the communication unit 149, creates visualization information by the visualization unit 145, and presents the visualization information to the user via the output unit 148. The operation based on the flowchart in FIG. 9 is as follows.

Step S901: The control unit 146 starts the operation of the system, and then will perform processing in step S902.

Step S902: The control unit 146 collects, using the input unit 147 and the output unit 148, what kind of question related to local regulation is desired to be made using the general question unit 142 and the prompt related to the question type "general question" of the prompt collection DB 141, acquires information on the regulation necessary for the search such as the item of the regulation, the name of the regulation, and the name of the target region via the communication unit 149 using the generative AI application on the Internet, and then will perform processing in step S903.

Step S903: The control unit 146 collects, using the information on the regulation acquired in step S902, the information on the software to be updated acquired from the user, the question common between departments of the prompt collection DB 141, the inter-department common knowledge search unit 143, and the inter-department common knowledge DB 131 of the business knowledge DB 130, information related to the vehicle and the system linked to the software to be updated, and then will perform processing in step S904.

Step S904: The control unit 146 collects, using the information on the regulation acquired in step S902, the information on the software to be updated acquired from the user, the information on the vehicle and the system acquired in step S903, the individual department question of the prompt collection DB 141, the individual department knowledge search unit 144, and the department-specific knowledge DB 132 of the business knowledge DB 130, the information related to the component and the software having the dependency with the software to be updated, and then will perform processing in step S905.

Step S905: The control unit 146 generates information necessary for visualization from the information on the dependency of the software acquired in step S904, indicates the information to the user using the output unit 148, and then will perform processing in step S906.

Step S906: The control unit 146 ends the processing.

FIG. 10 is a diagram showing an example of the prompt collection DB 141 (table 1000).

The table 1000 is configured to include information including a question number 1001, a question type 1002, a classification 1003, a region 1004, and a prompt example 1005. The question number 1001 is an item for managing a prompt. The question type 1002 is an item for managing a question type such as a general question, a question related to a plurality of departments in a company, a question related to an individual department, or a question related to a combination thereof. The classification 1003 is an item indicating a classification of questions such as a question related to a regulation, a question related to a vehicle, a question related to a system constituting the vehicle, a question related to a component constituting the vehicle, a question related to software constituting the vehicle, or a question related to a combination thereof. The region 1004 is an item for designating a country that has enacted a regulation when a question is asked, such as Japan, Europe, China, the United States, and other regions. The prompt example 1005 is an item indicating a template of a question sentence for creating a prompt.

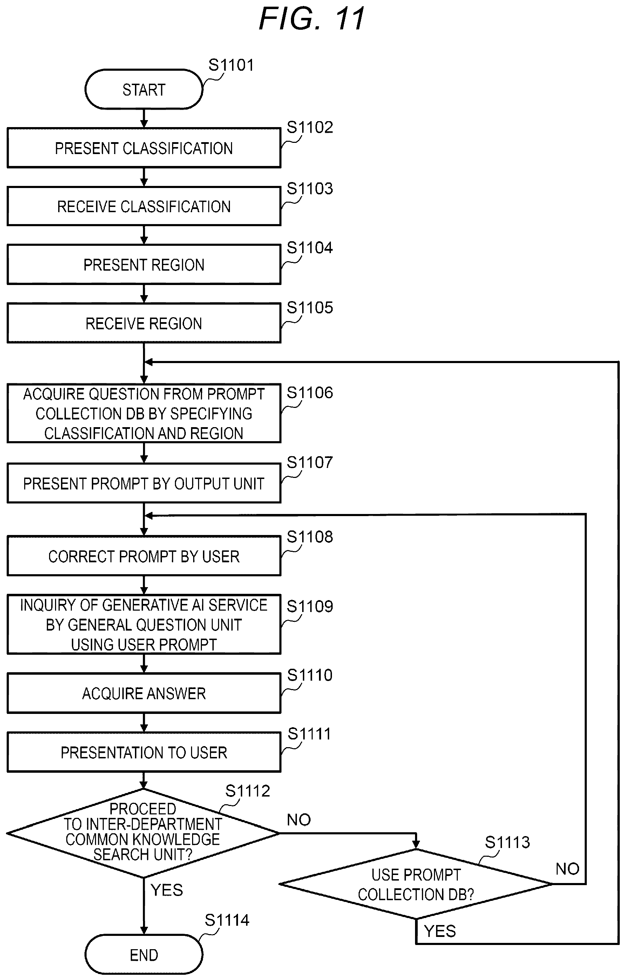

FIG. 11 is an example of a flowchart showing the general question processing (step S902) in FIG. 9. The control unit 146 collects information related to regulations required by the user and various types of published information using the general question unit 142 and using the generative AI service or the like provided as a service on the Internet via the communication unit 149 based on the content whose question type 1002 is general question and the prompt corrected by the user using the input unit 147 based on the content among the prompt examples shown in FIG. 10 stored in the prompt collection DB 141. The operation based on the flowchart in FIG. 11 is as follows.

Step S1101: The control unit 146 starts the processing and performs processing in step S1102.

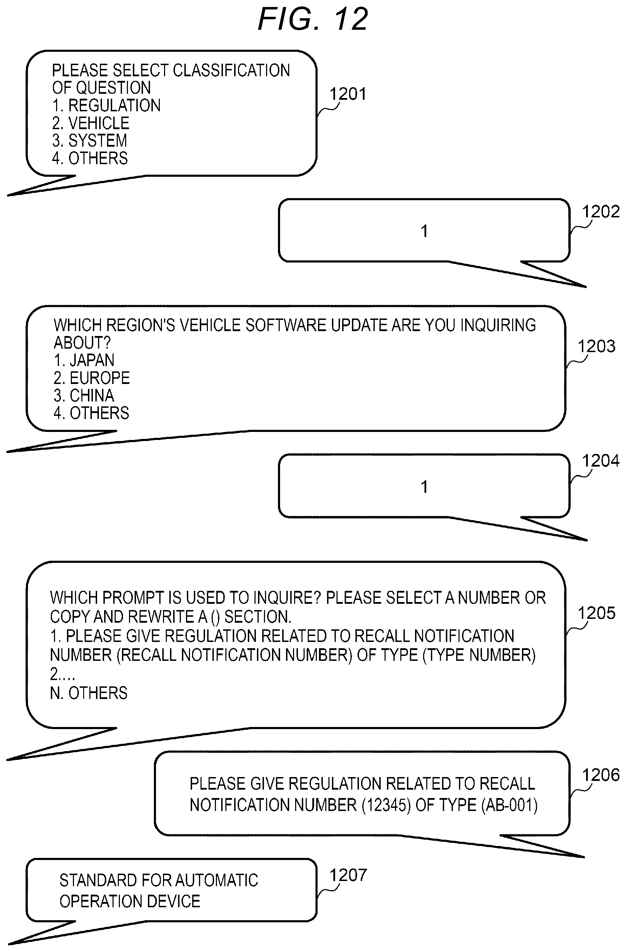

Step S1102: The control unit 146 outputs all or some of the combinations of the classifications 1003 included in the prompt whose question type 1002 is "general question" from the prompt collection DB 141 using the output unit 148 in a format as in an example 1201 of FIG. 12 to be described below, and then will perform processing in step S1103.

Step S1103: The control unit 146 receives, from the input unit 147, a result selected by the user from the output result of step S1102 and input in a format as in an example 1202 of FIG. 12 to be described below, and then will perform processing in step S1104.

Step S1104: Based on the result acquired in step S1103, the control unit 146 outputs all or some of the combinations of the regions 1004 included in the prompt in which the question type 1002 is "general question" and the classification 1003 matches the result acquired in step S1103 from the prompt collection DB 141 using the output unit 148 in a format as in an example 1203 of FIG. 12 to be described below, and then will perform processing in step S1105.

Step S1105: The control unit 146 receives, from the input unit 147, a result selected by the user from the output result of step S1104 and input in a format as in an example 1204 of FIG. 12 to be described below, and then will perform processing in step S1106.

Step S1106: The control unit 146 acquires a prompt corresponding to the "general question" in the classification and the region acquired in step S1103 and step S1105 from the prompt collection DB 141, and then will perform processing in step S1107.

Step S1107: The control unit 146 outputs, using the output unit 148, the prompt acquired in step S1106 in a format as in an example 1205 of FIG. 12 to be described below, and then will perform processing in step S1108.

Step S1108: The control unit 146 receives correction of the prompt by the user. The user copies a prompt to be used among, for example, the prompts in the example 1205 of FIG. 12 to be described below output by the output unit 148, rewrites the inside of (), requests the control unit 146 to perform processing, and then will perform processing in step S1109.

Step S1109: The control unit 146 requests, using the general question unit 142 and using the API provided by the generative AI service on the Internet via the communication unit 149, the processing of the prompt input in step S1108, and then will perform processing in step S1110.

Step S1110: The control unit 146 acquires, via the communication unit 149, a return value of the processing requested by the general question unit 142 in step S1109, and then will perform processing in step S1111.

Step S1111: The control unit 146 outputs, using the output unit 148, the processing result acquired by the general question unit 142 in step S1110 in the format of an example 1207 of FIG. 12 to be described below, and then will perform processing in step S1112.

Step S1112: The control unit 146 receives, using the input unit 147 and the output unit 148, an instruction from the user as to whether to proceed to the processing by the inter-department common knowledge search unit 143 or to continue the question. The control unit 146 performs processing in step S1114 when proceeding to the processing by the inter-department common knowledge search unit 143, and then will perform processing in step S1113 when there is still a question.

Step S1113: The control unit 146 receives, using the input unit 147 and the output unit 148, the user's selection of whether to ask a question using the prompt collection DB 141 or to allow the user to freely input the question. The control unit 146 returns to step S1106 if the prompt collection DB 141 is used, and returns to step S1108 if the user is allowed to freely input.

Step S1114: The control unit 146 ends the general question processing.

According to the general question processing, recall-related regulations can be narrowed down, or regulations for which addition or revision has been performed can be narrowed down based on public information by using the prompt collection DB 141.

FIG. 12 is a diagram showing an example of interaction between the user and the dependency visualization device 100 using the input unit 147 and the output unit 148 in the general question processing (step S902) shown in FIG. 9.

The example 1201 shows an example in which the classification is presented to the user in step S1102 of FIG. 11. The example 1202 shows an example in which the classification is received from the user in step S1103. The example 1203 shows an example in which a region is presented to the user in step S1104. The example 1204 shows an example in which a region is received from the user in step S1105. The example 1205 shows an example of a prompt presented to the user in step S1107. The example 1206 shows an example in which the prompt is corrected by the user in step S1108. The example 1207 shows an example in which the answer acquired from the generative AI service is presented to the user in step S1111.

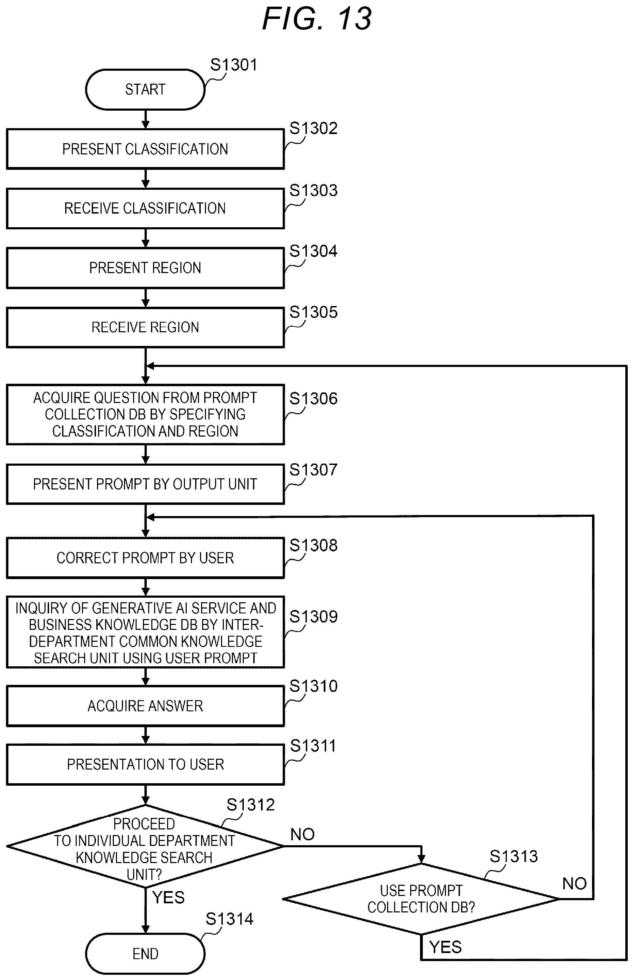

FIG. 13 is an example of a flowchart showing the inter-department common knowledge search processing (step S903) of FIG. 9. The control unit 146 collects the information on the vehicle and the system required by the user from the information stored in the inter-department common knowledge DB 131 of the business knowledge DB 130 by using a vector search technique or the like for the inter-department common knowledge search unit 143 based on the information related to the software desired to be updated by the user, the information related to the regulation acquired by the user in the general question processing (step S902), a content whose question type 1002 is common between departments among the prompts shown in FIG. 10 stored in the prompt collection DB 141, and the prompt corrected by the user using the input unit 147 based on the content. The operation based on the flowchart in FIG. 13 is as follows.

Step S1301: The control unit 146 starts the processing and performs processing in step S1302.

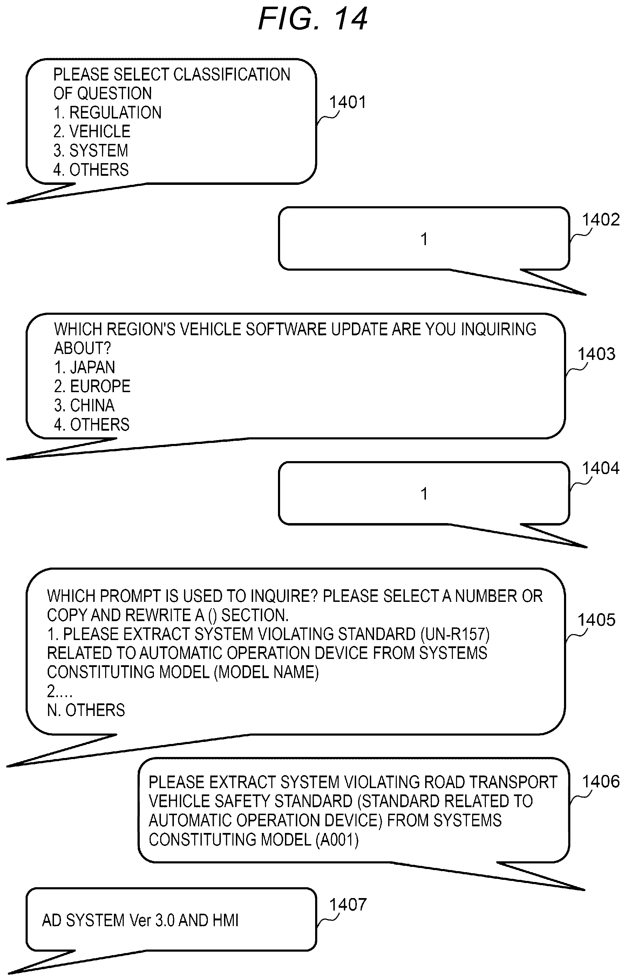

Step S1302: The control unit 146 outputs all or some of the combinations of the classifications 1003 included in the prompt whose question type 1002 is "common between departments" from the prompt collection DB 141 using the output unit 148 in a format as in an example 1401 of FIG. 14 to be described below, and then will perform processing in step S1303.

Step S1303: The control unit 146 receives, from the input unit 147, a result selected by the user from the output result of step S1302 and input in a format as in an example 1402 of FIG. 14 to be described below, and then will perform processing in step S1304.

Step S1304: Based on the result acquired in step S1303, the control unit 146 uses the output unit 148 to output, from the prompt collection DB 141, all or some of the combinations of the regions 1004 included in the prompt in which the question type 1002 is "common between departments" and the classification 1003 matches the result acquired in step S1303, in a format as in an example 1403 of FIG. 14 to be described below, and then will perform processing in step S1305.

Step S1305: The control unit 146 receives, from the input unit 147, a result selected by the user from the output result of step S1304 and input in a format as in an example 1404 of FIG. 14 to be described below, and then will perform processing in step S1306.

Step S1306: The control unit 146 acquires, from the prompt collection DB 141, prompts corresponding to "common between departments" in the classification and the region respectively acquired in step S1303 and step S1305, and then will perform processing in step S1307.

Step S1307: The control unit 146 outputs, using the output unit 148, the prompts acquired in step S1306 in a format as in an example 1405 of FIG. 14 to be described below, and then will perform processing in step S1308.

Step S1308: The control unit 146 receives correction of the prompt by the user. The user copies a prompt to be used among, for example, the prompts output by the output unit 148 in an example 1405 of FIG. 14 to be described below, rewrites the inside of (), requests the control unit 146 to perform processing, and then will perform processing in step S1309.

Step S1309: The control unit 146 executes the knowledge search for the inter-department common knowledge DB 131 of the business knowledge DB 130 using the inter-department common knowledge search unit 143, using the API provided by the generative AI service on the Internet via the communication unit 149 and the API provided by the vector search application, and using the prompt input in step S1308, and then will perform processing in step S1310.

For example, when the prompt is "please extract model corresponding to standard (UN-R157) related to automatic operation device", the inter-department common knowledge search unit 143 searches for a model name "V001" corresponding to the related regulation name "UN-R157" using the content (system configuration table) in the storage area 500-2 stored in the inter-department common knowledge DB 131. At this time, a plurality of model names may be searched. In addition, for example, when the prompt is "please extract system violating standard (UN-R157) related to automatic operation device from systems constituting model (V001)", the inter-department common knowledge search unit 143 searches for the system name "autonomous driving system" corresponding to the model name "V001" and the related regulation name "UN-R157" using the system configuration table stored in the inter-department common knowledge DB 131, and searches for the function names "lane keeping function, reverse assist function, pre-crash braking function, and the like" of the functions included in the autonomous driving system. At this time, a plurality of system names may be searched.

The knowledge search is not limited to the above contents. For example, the control unit 146 may be configured to search for the system name "autonomous driving system" associated with the related regulation name "UN-R157" with reference to information (a chapter of the related regulation of the system design document) in the inter-department common knowledge DB 131 in which the contents of the storage area 700 and the storage area 800 are stored.

Step S1310: The control unit 146 acquires a return value of the processing requested by the inter-department common knowledge search unit 143 in step S1309, and then will perform processing in step S1311.

Step S1311: The control unit 146 outputs, using the output unit 148, the processing result acquired by the inter-department common knowledge search unit 143 in step S1310 in the format of an example 1407 of FIG. 14 to be described below, and then will perform processing in step S1312.

Step S1312: The control unit 146 receives, using the input unit 147 and the output unit 148, an instruction from the user as to whether to proceed to the processing by the individual department knowledge search unit 144 or continue the question. The control unit 146 will perform processing in step S1314 if the processing proceeds to the processing by the individual department knowledge search unit 144, and will perform processing in step S1313 if there is still a question.

Step S1313: The control unit 146 receives, using the input unit 147 and the output unit 148, the user's selection of whether to ask a question using the prompt collection DB 141 or to allow the user to freely input the question. The control unit 146 will return to step S1306 if the prompt collection DB 141 is used, and will return to step S1308 if the user is allowed to freely input.

Step S1314: The control unit 146 ends the inter-department common knowledge search processing.

According to the inter-department common knowledge search processing, a vehicle (model) related to a regulation can be narrowed down from information related to the regulation, or a system that violates the regulation can be narrowed down from among systems constituting the vehicle by using the prompt collection DB 141. For example, when information on a recall-related regulation or a regulation for which addition or revision has been performed is extracted, elements (vehicles, systems, and the like) common between departments having a dependency with the regulation can be easily narrowed down.

FIG. 14 is a diagram showing an example of interaction between the user and the dependency visualization device 100 using the input unit 147 and the output unit 148 in the inter-department common knowledge search processing (step S903) shown in FIG. 9.

The example 1401 shows an example in which the classification is presented to the user in step S1302 of FIG. 13. The example 1402 shows an example in which the classification is received from the user in step S1303. The example 1403 shows an example in which a region is presented to the user in step S1304. The example 1404 shows an example in which a region is received from a user in step S1305. The example 1405 shows an example of a prompt presented to the user in step S1307. The example 1406 shows an example in which the user or the prompt is corrected in step S1308. The example 1407 shows an example in which the answer acquired from the generative AI service or the business knowledge DB 130 in step S1311 is presented to the user.

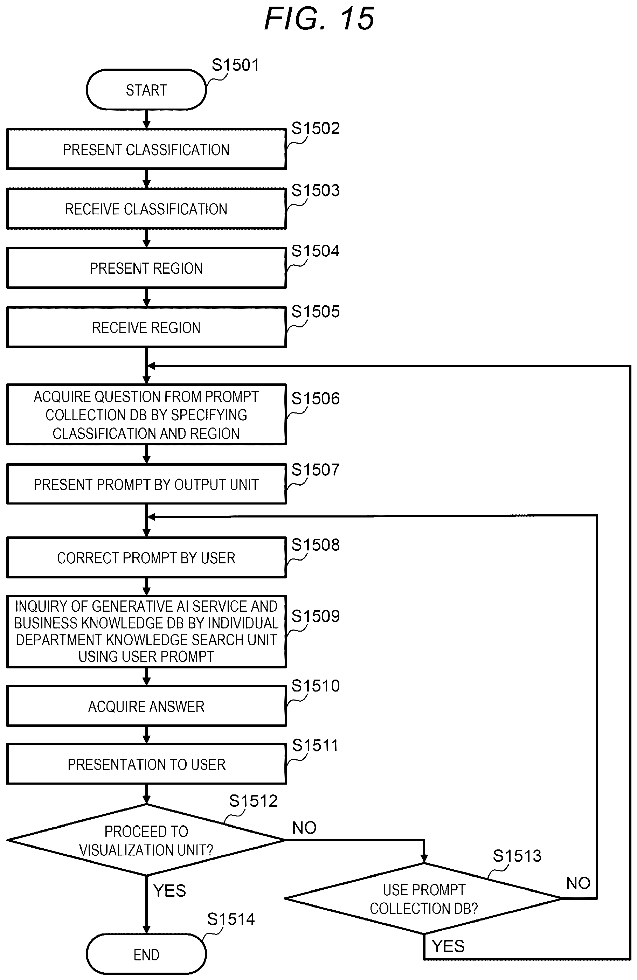

FIG. 15 is an example of a flowchart showing the individual department knowledge search processing (step S904) of FIG. 9. The control unit 146 collects information on the component and software required by the user from information stored in the department-specific knowledge DB 132 of the business knowledge DB 130 by using a vector search technique or the like for the individual department knowledge search unit 144 as the target based on information related to software desired to be updated by the user, information related to regulations acquired by the user in the general question unit 142, information related to vehicles and systems acquired by the user in the inter-department common knowledge search unit 143, contents whose question type 1002 is the individual department among the prompts shown in FIG. 10 stored in the prompt collection DB 141, and a prompt corrected by the user using the input unit 147 based on the contents. The operation based on the flowchart in FIG. 15 is as follows.

Step S1501: The control unit 146 starts the processing and then will perform processing in step S1502.

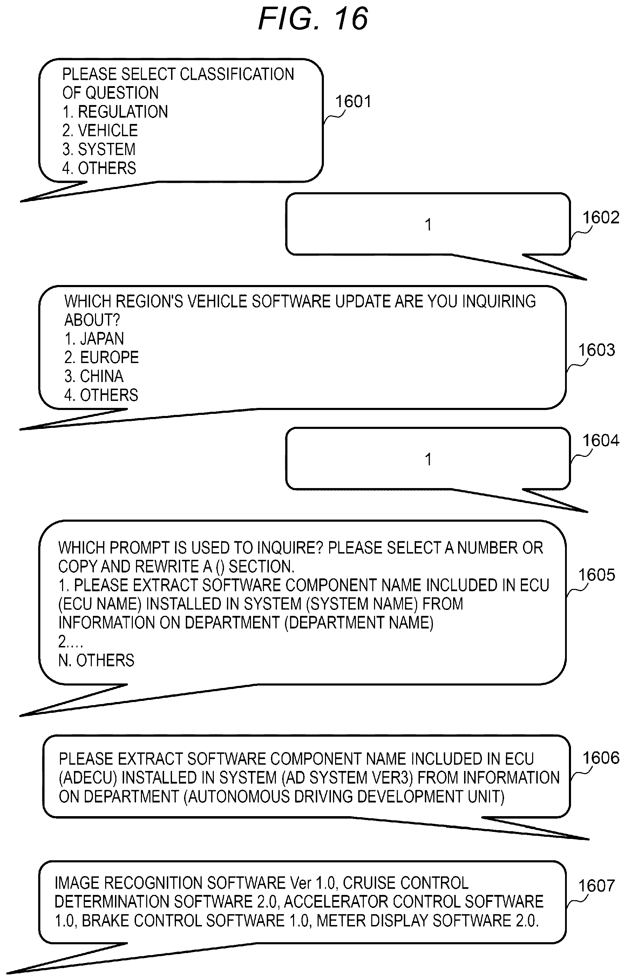

Step S1502: The control unit 146 outputs all or some of the combinations of the classifications 1003 included in the prompt whose question type 1002 is "individual department" from the prompt collection DB 141 using the output unit 148 in a format as in an example 1601 of FIG. 16 to be described below, and then will perform processing in step S1503.

Step S1503: The control unit 146 receives, from the input unit 147, a result selected by the user from the output result of step S1502 and input in a format as in an example 1602 of FIG. 16 to be described below, and then will perform processing in step S1504.

Step S1504: Based on the result acquired in step S1503, the control unit 146 uses the output unit 148 to output, from the prompt collection DB 141, all or some of the combinations of the regions 1004 included in the prompt in which the question type 1002 is "individual department" and the classification 1003 matches the result acquired in step S1503, in a format as in an example 1603 of FIG. 16 to be described below, and then will perform processing in step S1505.

Step S1505: The control unit 146 receives, from the input unit 147, a result selected by the user from the output result of step S1504 and input in a format as in an example 1604 of FIG. 16 to be described below, and then will perform processing in step S1506.

Step S1506: The control unit 146 acquires, from the prompt collection DB 141, a prompt corresponding to the "individual department" in the classification and the region respectively acquired in step S1503 and step S1505, and then will perform processing in step S1507.

Step S1507: The control unit 146 outputs, using the output unit 148, the prompt acquired in step S1506 in a format as in an example 1605 of FIG. 16 to be described below, and then will perform processing in step S1508.

Step S1508: The control unit 146 receives correction of the prompt by the user. The user copies a prompt to be used among, for example, the prompts output by the output unit 148 in an example 1605 of FIG. 16 to be described below, rewrites the inside of (), requests the control unit 146 to perform processing, and then will perform processing in step S1509.

Step S1509: The control unit 146 executes the knowledge search for the department-specific knowledge DB 132 of the business knowledge DB 130 using the individual department knowledge search unit 144, using the API provided by the generative AI service on the Internet via the communication unit 149 and the API provided by the vector search application, and using the prompt input in step S1508, and then will perform processing in step S1510.

Here, although not illustrated, the content extracted from the vehicle configuration management system 112 (a component configuration table in which a system, a component, and software are associated with each other) is stored in the department-specific knowledge DB 132 for each department, similarly to the content in the storage area 500-2. For example, when the prompt is "please extract information on ECU related to system (autonomous driving system) from information on department (department A)", the individual department knowledge search unit 144 searches for the component name "AD-ECU" corresponding to the system name "autonomous driving system" using the content in the component configuration table of the department A stored in the department-specific knowledge DB 132. At this time, a plurality of component names may be searched. For example, when the prompt is "please extract software name included in ECU (AD-ECU) installed on system (autonomous driving system) from information on department (department A)", the individual department knowledge search unit 144 searches for the software names "image recognition software, cruise control determination software, accelerator control software, brake control software, and meter display software" corresponding to the system name "autonomous driving system" and the component name "AD-ECU" using the contents in the component configuration table of the department A stored in the department-specific knowledge DB 132.

In addition, although not illustrated, contents (contents such as application lifecycle management (ALM) and software bill of materials (SBOM)) extracted from the vehicle configuration management system 112 are stored in the department-specific knowledge DB 132 as a software management table (a table in which calling relationships of software are associated with each other), similarly to the contents in the storage area 500-2. For example, in the case of a prompt "please check whether there is a calling relationship between software to be updated (cruise control determination software) and another software (image recognition software, accelerator control software, brake control software, or meter display software) from ALM/SBOM", the individual department knowledge search unit 144 searches for a name of other software "meter display software" corresponding to the software name "cruise control determination software" using the contents in the software management table stored in the department-specific knowledge DB 132.

The knowledge search is not limited to the above contents. For example, the component name "AD-ECU" corresponding to the system name "autonomous driving system" may be searched using information (for example, the explanatory text in the figure) in the department-specific knowledge DB 132 in which the content in the storage area 400 is stored. Further, for example, the control unit 146 may be configured to search for a software name "meter display software" of software having a calling relationship with reference to a chapter of a basic design or an external design of a software design document of software to be updated (cruise control determination software) among pieces of information in the department-specific knowledge DB 132 in which the contents in the storage area 700 and the contents in the storage area 800 are stored.

Step S1510: The control unit 146 acquires a return value of the processing requested by the individual department knowledge search unit 144 in step S1509, and then will perform processing in step S1511.

Step S1511: The control unit 146 outputs, using the output unit 148, the processing result acquired by the individual department knowledge search unit 144 in step S1510 in the format of an example 1607 of FIG. 16 to be described below, and then will perform processing in step S1512.

Step S1512: The control unit 146 receives, using the input unit 147 and the output unit 148, an instruction from the user as to proceed to the processing by the visualization unit 145 or to continue the question. The control unit 146 will perform processing in step S1514 if the process proceeds to the processing by the visualization unit 145, and the control unit 146 will perform processing in step S1513 if there is still a question.

Step S1513: The control unit 146 receives, using the input unit 147 and the output unit 148, the user's selection of whether to ask a question using the prompt collection DB 141 or to allow the user to freely input the question. The control unit 146 will return to step S1506 if the prompt collection DB 141 is used, and will return to step S1508 if the user is allowed to freely input.

Step S1514: The control unit 146 ends the individual department knowledge search processing.

According to the individual department knowledge search processing, components (ECU or the like) related to the system can be narrowed down or software included in the components can be narrowed down from information related to the system by using the prompt collection DB 141. For example, when information on a regulation related to a recall or a regulation for which addition or revision has been performed is extracted, after a vehicle and a system having a dependency with the regulation are narrowed down by the inter-department common knowledge search processing, a department-specific element (component, software, or the like) having a dependency with the system can be narrowed down by the individual department knowledge search processing.

FIG. 16 is a diagram showing an example of interaction between the user and the dependency visualization device 100 using the input unit 147 and the output unit 148 in the individual department knowledge search processing (step S904) shown in FIG. 9.

The example 1601 shows an example in which the classification is presented to the user in step S1502 of FIG. 15. The example 1602 shows an example in which the classification is received from the user in step S1503. The example 1603 shows an example in which a region is presented to the user in step S1504. The example 1604 shows an example in which a region is received from the user in step S1505. The example 1605 shows an example of a prompt presented to the user in step S1507. The example 1606 shows an example in which the user has corrected the prompt in step S1508. The example 1607 shows an example in which the answer acquired from the generative AI service or the business knowledge DB 130 in step S1511 is presented to the user.

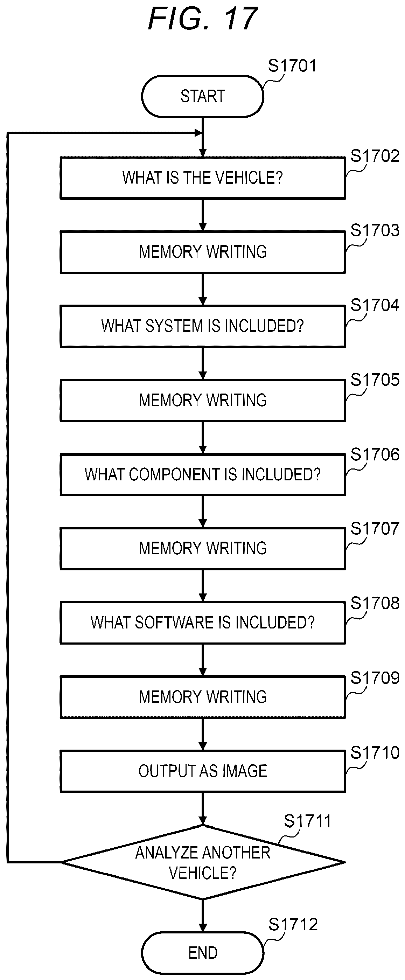

FIG. 17 is an example of a flowchart showing the visualization processing (step S905) in FIG. 9. The control unit 146 displays the dependency related to the software update on the output unit 148 using the visualization unit 145 based on the information related to the software desired to be updated by the user, the information related to the regulation acquired by the user in the general question unit 142, the information related to the vehicle and the system acquired by the user in the inter-department common knowledge search unit 143, and the information related to the component and the software to be updated acquired by the individual department knowledge search unit 144. The operation based on the flowchart in FIG. 17 is as follows.

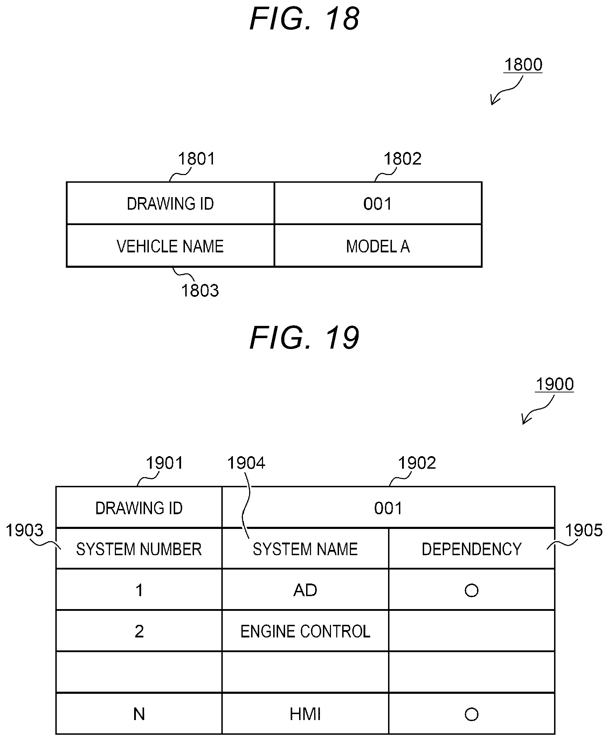

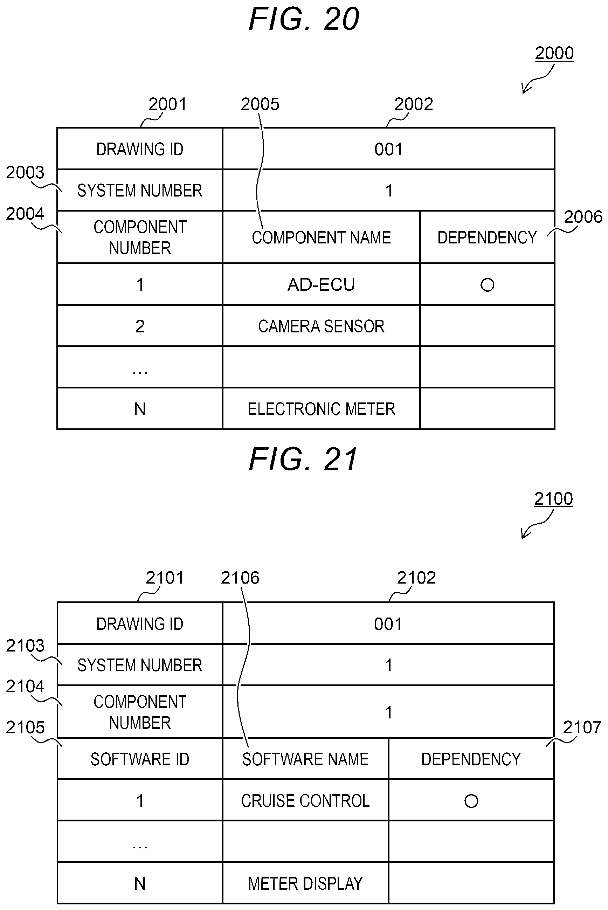

Step S1701: The control unit 146 ensures a vehicle name storage area shown in FIG. 18, a system name storage area shown in FIG. 19, a component name storage area shown in FIG. 20, and a software name storage area shown in FIG. 21, which will be described below, generates drawing IDs, respectively stores the drawing IDs in the drawing ID areas 1802, 1902, 2002, and 2102 of the areas, starts the processing, and then will perform processing in step S1702.

Step S1702: The control unit 146 extracts a name of the vehicle from the information on the vehicle name (model name) obtained in the inter-department common knowledge search processing (step S903) by character string search or the like from the inter-department common knowledge DB 131, and then will perform the processing in step S1703.

Step S1703: The control unit 146 stores the vehicle name in an area 1803 shown in FIG. 18, and then will perform processing in step S1704.

Step S1704: The control unit 146 extracts, from the information obtained in the inter-department common knowledge search processing (step S903), a name of a system included in the vehicle and dependency information related to current dependency visualization by character string search or the like, and will perform processing in step S1705. For example, the control unit 146 acquires the name of the system corresponding to the system name from the public information or the business knowledge DB 130, and extracts the system searched in step S1309 as the system related to the current dependency visualization.

Step S1705: The control unit 146 assigns a number to each system name, stores the system number in an area 1903, stores the name of the system in an area 1904, stores the presence or absence of a dependency in an area 1905, and will perform processing in step S1706.

Step S1706: The control unit 146 extracts, from the information obtained in the individual department knowledge search processing (step S904), names of components constituting the system and the dependency information related to the current dependency visualization by character string search or the like, and then will perform processing in step S1707. For example, the control unit 146 acquires the name of the component corresponding to the component name from the public information or the business knowledge DB 130, and extracts the component searched in step S1509 as the component related to the current dependency visualization.

Step S1707: The control unit 146 assigns a number to each component name, stores the system number including the component in the area 2003, stores the component number in an area 2004, stores the name of the component in an area 2005, stores the presence or absence of the dependency in an area 2006, and then will perform processing in step S1708.

Step S1708: The control unit 146 extracts, from the information obtained in the individual department knowledge search processing, the name of the software and the dependency information related to the current dependency visualization by character string search or the like, and then will perform processing in step S1709. For example, the control unit 146 acquires the name of the software corresponding to the software name from the public information or the business knowledge DB 130, and extracts the software searched for in step S1509 as the software related to the current dependency visualization.

Step S1709: The control unit 146 assigns a number to each software name, stores a system number of the system including the software in an area 2103, stores a component number of the component, on which the software is installed, in an area 2104, stores a name of the software in an area 2106, stores the presence or absence of the dependency in an area 2107, and will perform processing in step S1710.

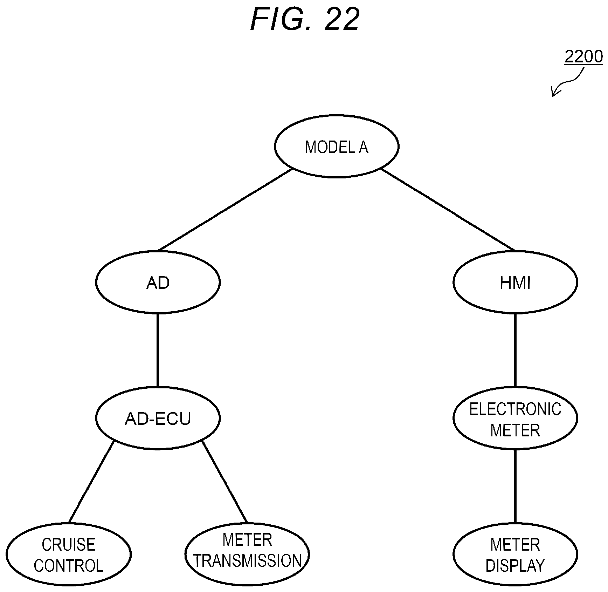

Step S1710: The control unit 146 sequentially visualizes the memory structures in FIGS. 18, 19, 20, and 21 as a hierarchical structure as shown in FIG. 22. The visualization is performed by describing each element, and connecting, by a line, the elements in which o is shown in the dependency.

Step S1711: The control unit 146 determines whether to analyze another vehicle. The control unit 146 will return to step S1702 if another vehicle is analyzed, and will perform processing in step S1712 if another vehicle is not analyzed.

Step S1712: The control unit 146 ends the visualization processing.

FIG. 18 is an example (storage area 1800) of a storage format in which the information related to the vehicle is written in step S1703 of memory writing shown in FIG. 17. The storage area 1800 includes the drawing ID area 1801 and the vehicle name area 1803. The drawing ID generated in step S1701 is recorded in the area 1802.

FIG. 19 is an example of a storage format (storage area 1900) in which the information related to the system is written in step S1705 of memory writing shown in FIG. 17. The storage area 1900 includes the drawing ID area 1901, the system number area 1903, the system name area 1904, and the area 1905 indicating the presence or absence of a dependency. The drawing ID generated in step S1701 is recorded in the area 1902.

FIG. 20 is an example (storage area 2000) of a storage format in which the information related to the component is written in step S1707 of memory writing shown in FIG. 17. The storage area 2000 includes the drawing ID area 2001, the system number area 2003, the component number area 2004, the component name area 2005, and the area 2006 indicating the presence or absence of a dependency. The drawing ID generated in step S1701 is recorded in the area 2002.

FIG. 21 is an example (storage area 2100) of a storage format in which the information related to the software is written in step S1709 of memory writing shown in FIG. 17. The storage area 2100 includes the drawing ID area 2101, the system number area 2103, the component number area 2104, the software ID area 2105, the software name area 2106, and the area 2107 indicating a dependency. The drawing ID generated in step S1701 is recorded in the area 2102.

FIG. 22 is an example (display example 2200) showing a dependency of software output by the output unit 148 according to the visualization processing (step S905).

In the display example 2200, a system, a component, and software having a dependency are displayed for each vehicle (model), and the dependency of the software is visualized.

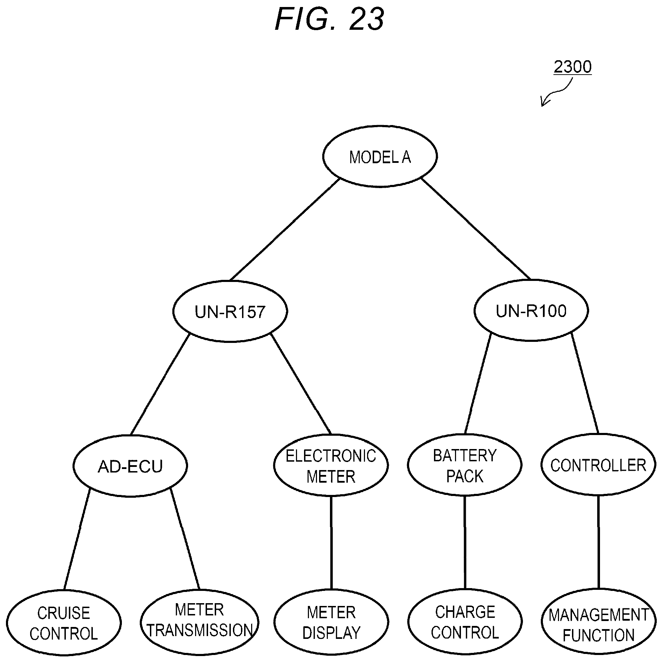

FIG. 23 is an example (display example 2300) showing a dependency of software output by the output unit 148 according to the visualization processing (step S905). In the case of the display example 2300, for example, instead of step S1704, the control unit 146 extracts, by character string search or the like, the regulation name corresponding to the vehicle and the dependency information related to the current dependency visualization from the information obtained in the general question processing (step S902). Instead of step S1705, the control unit 146 assigns a number to each regulation name, stores the regulation number, the regulation name, and the presence or absence of a dependency, and performs the processing in step S1706.

In the display example 2300, for each vehicle (model), the regulation requirements to which the vehicle applies, the components constituting the vehicle for each regulation, and the software contained therein are displayed, thereby visualizing the dependency of software.

Here, the regulation parts are represented by the United Nations regulation called "UN-R", but they may be Japanese automobile-related laws or laws specific to each country, such as EU, North America, or China. In addition, not only those related to autonomous driving shown in FIG. 22 but also other components and software constituting the components may be shown as shown in FIG. 23.

### (II) Appendices

The above-described embodiment includes, for example, the following contents.

In the above-described embodiment, the case in which the invention is applied to a dependency visualization device is described, and the invention is not limited thereto, and can be widely applied to various other systems, devices, methods, and programs.

One feature of the invention lies in the use of retrieval-augmented generation (RAG). The use of the business knowledge DB 130 and the use of the dependency resolution unit 140 are an example of RAG. The invention is also applicable to industrial fields other than automobiles.

In the above-described embodiment, a case in which the dependency visualization device 100 narrows down regulations, vehicles, systems, components, and the like has been described, but the invention is not limited thereto. For example, the filtering may be performed by a contract of the user. For example, when a subscription contract for autonomous driving, such as providing the latest function, is made, the dependency visualization device 100 may narrow down the target of the current update to the user who has made the subscription.

Further, in the above-described embodiment, the case in which the dependency visualization device 100 displays the dependency of software in a hierarchical structure has been described, but the invention is not limited thereto. For example, the dependency visualization device 100 may display, with a list, software related to the update target.

In the above-described embodiment, a part or all of the programs may be installed from a program source into a device such as a computer that implements the dependency visualization device. The program source may be, for example, a program distribution server connected via a network or a computer-readable recording medium (for example, a non-transitory recording medium). In the above-described description, two or more programs may be implemented as one program, or one program may be implemented as two or more programs.

In the above-described embodiment, a configuration of each table is an example. One table may be divided into two or more tables, or all or some of two or more tables may be one table.

In the above-described embodiment, for convenience of description, the information related to the dependency visualization device is described using the tables, and a data structure is not limited to the table. The information related to the dependency visualization device may be expressed by a data structure other than a table, such as Extensible Markup Language (XML), YAML Ain't a Markup Language (YAML), a hash table, or a tree structure.

In the above-described embodiment, the screens illustrated and described are examples, and any design may be used as long as the same information is received.

In addition, in the above-described embodiment, the screens illustrated and described are examples, and any design may be used as long as information to be presented is the same.

In the above-described embodiment, an output of the information is not limited to the display on a display. The output of the information may be an audio output by a speaker, an output to a file, printing on a paper medium or the like by a printing device, projection on a screen or the like by a projector, or other modes.

In the above-described description, information such as a program, a table, and a file for implementing each function can be stored in a storage device such as a memory, a hard disk, and a solid state drive (SSD), or in a recording medium such as an IC card, an SD card, and a DVD.

The above-described embodiment has, for example, the following characteristic configurations.
(1) A dependency visualization device (for example, a dependency visualization device 100) for visualizing a dependency of software includes: a filtering unit (for example, a dependency resolution unit 140, a control unit 146) configured to communicate with a user using knowledge information (for example, a business knowledge DB 130) including information on elements (for example, a regulation, a vehicle, a system, a component, and software) related to the software, and to narrow the elements related to the software in a stepwise manner down to an element related to an update target (for example, recall and law correction); and an output unit (for example, a dependency resolution unit 140 and an output unit 148) configured to output the dependency of the software related to the update target based on the element narrowed down by the filtering unit.

In the above configuration, the elements related to the update target are narrowed down in the stepwise manner, and therefore, for example, the user can easily communicate with the dependency visualization device and easily grasp the dependency of the software related to the update target.

(2) The dependency visualization further includes: an acquisition unit (for example, a business knowledge extraction unit 120, a knowledge DB creation unit 121, and step S202) configured to acquire, via a generative AI service, an explanatory text of an image included in a document managed by an existing business system; an extraction unit (for example, the business knowledge extraction unit 120, the knowledge DB creation unit 121, and step S203) configured to replace the image in the document with the explanatory text acquired by the acquisition unit, and to extract data on a creation date and time of a document obtained by the replacement, a file name of the document, and a keyword included in the document; and a storage unit (for example, the business knowledge extraction unit 120, the knowledge DB creation unit 121, and step S204) configured to store, as the knowledge information, the data extracted by the extraction unit.

According to the above configuration, the image included in the existing document is stored in the knowledge information as the explanatory text, and therefore, the existing document can be effectively utilized, for example, in visualization of a dependency of software using RAG.

(3) The filtering unit includes a first filtering unit (for example, a general question unit 142) configured to receive information on the update target and to acquire information on a regulation related to the received update target from public information, a second filtering unit (for example, an inter-department common knowledge search unit 143) configured to specify, based on the knowledge information and the interaction with the user, a vehicle related to the regulation acquired by the first filtering unit and to specify a system violating the regulation from systems constituting the specified vehicle, and a third filtering unit (for example, an individual department knowledge search unit 144) configured to specify a component related to the system specified by the second filtering unit and to specify software included in the specified component.

In the above configuration, for example, the regulation related to an update target, a vehicle related to the regulation, the system violating the regulation among systems constituting the vehicle, the component related to the system, and the software included in the component can be specified. According to the above configuration, for example, the user can grasp the dependency of software in association with the vehicle, the system, and the component.

(4) The output unit outputs, by connecting elements having a dependency, the vehicle, the system, the component, and the software specified by the filtering unit (for example, see FIG. 22). The output unit may output, by connecting elements having a dependency, the vehicle, the regulation, the component, and the software specified by the filtering unit.

In the above configuration, the elements having the dependency are connected and output, and therefore, for example, the user can easily grasp the dependency of software.

(5) The dependency visualization device further includes a storage unit (for example, a prompt collection DB 141 and a table 1000) configured to store an example of a prompt for specifying the regulation, an example of a prompt for specifying a model related to the regulation, an example of a prompt for specifying the system violating the regulation, an example of a prompt for specifying the component related to the system, and an example of a prompt for specifying the software included in the component.

In the above configuration, for example, an example of a prompt is presented in the communication with the user, and therefore, the work of the user who creates the prompt can be reduced. In addition, for example, a situation in which an answer is not intended by the user is reduced by using an example of a prompt, and therefore, the resources of the computer can be efficiently used.

The above-described configurations may be appropriately changed, rearranged, combined, or omitted without departing from the scope of the invention.

Items included in the list in the format of "at least one of A, B, and C" can mean (A), (B), (C), (A and B), (A and C), (B and C), or (A, B, and C). Similarly, the items listed in the format of "at least one of A, B, or C" can mean (A), (B), (C), (A and B), (A and C), (B and C), or (A, B, and C).

## Claims

1. A dependency visualization device for visualizing a dependency of software, the dependency visualization device comprising:
a filtering unit configured to communicate with a user using knowledge information including information on elements related to the software, and to narrow the elements related to the software in a stepwise manner down to an element related to an update target; and
an output unit configured to output the dependency of the software related to the update target based on the element narrowed down by the filtering unit.

2. The dependency visualization device according to claim 1, further comprising:
an acquisition unit configured to acquire, via a generative AI service, an explanatory text of an image included in a document managed by an existing business system;
an extraction unit configured to replace the image in the document with the explanatory text acquired by the acquisition unit, and to extract data on a creation date and time of a document obtained by the replacement, a file name of the document, and a keyword included in the document; and
a storage unit configured to store, as the knowledge information, the data extracted by the extraction unit.

3. The dependency visualization device according to claim 1, wherein
the filtering unit includes
a first filtering unit configured to receive information on the update target and to acquire information on a regulation related to the received update target from public information,
a second filtering unit configured to specify, based on the knowledge information and the communication with the user, a vehicle related to the regulation acquired by the first filtering unit and to specify a system violating the regulation from systems constituting the specified vehicle, and
a third filtering unit configured to specify a component related to the system specified by the second filtering unit and to specify software included in the specified component.

4. The dependency visualization device according to claim 3, wherein
the output unit outputs, by connecting elements having a dependency, the vehicle, the system, the component, and the software specified by the filtering unit.

5. The dependency visualization device according to claim 3, further comprising:
a storage unit configured to store an example of a prompt for specifying the regulation, an example of a prompt for specifying a model related to the regulation, an example of a prompt for specifying the system violating the regulation, an example of a prompt for specifying the component related to the system, and an example of a prompt for specifying the software included in the component.

6. A dependency visualization method for visualizing a dependency of software, the dependency visualization method comprising:
communicating with a user using knowledge information including information on elements related to the software, and narrowing the elements related to the software in a stepwise manner down to an element related to an update target, by a filtering unit; and
outputting, by an output unit, the dependency of the software related to the update target based on the element narrowed down by the filtering unit.
